# EUROPÄISCHE PATENTSCHRIFT

(11) **EP 1 072 849 B1**
(45) Veröffentlichungstag und Bekanntmachung des Hinweises auf die Patenterteilung: **08.12.2004**
(21) Anmeldenummer: 00114814.7
(22) Anmeldetag: 11.07.2000
(51) Int. Cl.: F25B 1/00, F25B 7/00, F25B 49/02, F25D 17/02

(54) **Kälteanlage**
Refrigeration plant
Installation frigorifique

(30) Priorität: 30.07.1999 DE 19935545
(43) Veröffentlichungstag der Anmeldung: 31.01.2001
(73) Patentinhaber: BKT Bonnet Kältetechnik GmbH, 68165 Mannheim (DE)
(72) Erfinder: Tillner-Roth, Reiner Dr. Ing. Habil., 69469 Weinheim-Sulzbach (DE)
(74) Vertreter: Naumann, Ulrich, Dr.-Ing.

(56) Entgegenhaltungen:
- EP-A- 0 048 385
- EP-A- 0 340 115
- DE-U- 9 319 004
- US-A- 3 210 957
- US-A- 5 743 102
- US-A- 5 792 382

## Beschreibung

Die vorliegende Erfindung betrifft eine Kälteanlage mit indirektem Kühlsystem, bestehend aus einem mindestens einen Verdichter, einen Verflüssiger und einen Verdampfer umfassenden Primärkreislauf mit zirkulierendem Kältemittel, wobei dem Primärkreislauf hochdruckseitig, vorzugsweise über einen ersten Wärmetauscher, Wärme entzogen und niederdruckseitig, vorzugsweise über einen zweiten Wärmetauscher, Wärme zugeführt wird, und wobei gegebenenfalls zwischen dem ersten Wärmetauscher und einem Rückkühler eine als Wärmeträger dienende Warmsole und zwischen dem zweiten Wärmetauscher und mindestens einer Kühlstelle eine als Kälteträger dienende Kaltsole - jeweils in einem Sekundärkreislauf - zirkuliert.

Kälteanlagen der gattungsbildenden Art - es handelt sich hier um Kälteanlagen mit indirektem Kühlsystem - sind seit langem aus der Praxis bekannt. Lediglich beispielhaft wird dazu auf die DE 43 44 484 A1 verwiesen. Die aus der DE 43 44 484 A1 bekannte Kälteanlage umfasst einen Primärkreislauf und einen Sekundärkreislauf. Der Primärkreislauf besteht aus den Komponenten Verdichter, Verflüssiger, Drosselstelle und Verdampfer-Kondensator. Der Sekundärkreislauf umfasst den Verdampfer-Kondensator, eine Kältemittelpumpe und einen Wärmetauscher in einem Kühlmöbel. Im Konkreten handelt es sich bei der bekannten Kälteanlage um eine Anlage zur Erzeugung von Gewerbekälte, nämlich zur Versorgung der Lebensmittelkühlung einer Kaufhalle mit gekühltem Kältemittel. Für den Primärkreislauf ist dort Ammoniak und für den zweiten Kreislauf das Kältemittel R134a vorgesehen.

Die bekannte Kälteanlage ist jedoch in der Praxis insoweit problematisch, als der Primärkreislauf und der Sekundärkreislauf bzw. die Sekundärkreisläufe in kältetechnischer Hinsicht miteinander kombiniert sind, so dass der kältetechnische Bereich des Primärkreislaufs vom Sekundärkreislauf nicht eindeutig zu trennen ist. Die funktionale Verknüpfung beider Kreisläufe hat den großen Nachteil, dass nicht nur der eigentliche Primärkreislauf sondern auch der Bereich des Sekundärkreislaufs von einem qualifizierten Kältetechniker zu bauen, zu warten und gegebenenfalls zu reparieren ist. Ausserdem ist es gemäss Stand der Technik stets erforderlich, den Primärkreislauf und den Sekundärkreislauf bzw. die Sekundärkreisläufe gleichzeitig aufeinander abzustimmen, wodurch abermals eine qualifizierte Fachkraft, nämlich ein Kältetechniker, erforderlich ist. Eine weitere Kälteanlage gemäß dem Oberbegriff vom anspruch 1 ist aus US5743102 bekannt.

Aus der Praxis ist es bislang bekannt, den Primärkreislauf einer Kälteanlage mittels einer Verbundanlage zu realisieren. Eine solche Verbundanlage - als Primärkreislauf - ist jedoch äusserst aufwendig, da besondere Vorrichtungen zur Regulierung des Ölhaushalts des Verdichters bzw. der Verdichter erforderlich sind. Austauschaktionen einzelner Komponenten, insbesondere des Verdichters, sind aufwendig und daher kostenintensiv. Die Erweiterung solcher Verbundanlagen zur Erhöhung der Kälteleistung ist aufwendig oder gar nicht möglich. Ähnlich verhält es sich mit Kältemittelumstellungen, die regelmässig einen ganz erheblichen Aufwand erfordern, vor allem aber es notwendig machen, die gesamte Anlage still zu legen.

Um bei den bekannten Verbundanlagen den Arbeitsaufwand klein zu halten, muss eine erhebliche Anzahl von Absperrorganen in das System eingebaut werden, um nämlich Wartungsarbeiten an den Hauptkomponenten wie beispielsweise am Verdichter oder am Verflüssiger durchzuführen. Solche Wartungsarbeiten lassen sich nur bei Vorhandensein entsprechender Absperrorgane halbwegs kosten- und zeitgünstig durchführen. Bei den bekannten Verbundanlagen ist es weiterhin von Nachteil, dass bei Wartungsarbeiten stets ein Kältemittelverlust auftritt, der wiederum eine negative Beeinflussung der Umwelt mit sich bringt.

Der vorliegenden Erfindung liegt daher die Aufgabe zugrunde, eine Kälteanlage der gattungsbildenden Art derart auszugestalten und weiterzubilden, dass gegenüber herkömmlichen Kälteanlagen eine kostengünstigere Wartung möglich ist, wobei eine optimale Anpassung an die jeweiligen Betriebszustände möglich sein soll.

Die voranstehende Aufgabe wird durch die Merkmale des Patentanspruches 1 gelöst.

Erfindungsgemäss ist erkannt worden, dass man den Primärkreislauf in idealer Weise vom Sekundärkreislauf trennen kann, nämlich dadurch, dass man den die Kältetechnik beinhaltenden Primärkreislauf - mit einem Kompressor oder maximal mit zwei Kompressoren - als gekapselte, modulare Einheit ausführt. Folglich lässt sich der Primärkreislauf - jeweils mit der gesamten Kältetechnik in kleine Primärmodule unterteilt - modular in den Sekundärkreislauf bzw. in die Sekundärkreisläufe einbringen und dabei soleseitig zusammenschalten, wobei dies in Form der als Primärmodul bezeichneten Einheit erfolgt. Mit anderen Worten ist die Kältetechnik in kleine Primärmodule gekapselt, wobei jedes der Primärmodule am besten nur einen Kompressor mit vorgegebener Kälteleistung umfasst. Soleseitig werden die Primärmodule zusammengeschaltet, wodurch die Charakteristik einer herkömmlichen Verbundanlage jedoch mit gekapselten Primärmodulen bzw. mit gekapselter Kältetechnik, realisiert werden kann.

Die Trennung der Kältetechnik (Primärkreislauf mit gekapselten Primärmodulen) von dem Sekundärkreislauf sowie die soleseitige Zusammenschaltung der Primärmodule hat den enormen Vorteil, dass sich der kältetechnische Aufwand einzig und allein auf den aus gekapselten Primärmodulen bestehenden Primärkreislauf beschränkt, so dass - abgesehen von dem für sich handhabbaren Primärmodul - zur Installation, Wartung oder Reparatur des Sekundärkreislaufs, insbesondere aber auch zum soleseitigen Anschluß der Primärkreisläufe, lediglich ein Installateur aus dem Heizungs- und Sanitärbereich erforderlich ist. Bereits aus diesem Grunde lassen sich mit der erfindungsgemässen Kälteanlage die Betriebskosten ganz erheblich reduzieren. Der Primärkreislauf wird in Form mehrerer Primärmodule ausgestaltet, wobei jedes Primärmodul für sich einen Kältekreislauf mit einem, höchstens zwei Verdichtern enthält. Dies hat den Vorteil, dass im Gegensatz zu den herkömmlichen Verbundanlagen kein Ölregulierungssystem erforderlich ist. Jedes Primärmodul enthält eine nur minimale Kältemittelfüllmenge. Der Austausch einzelner - ganzer - Module ist ohne Kältemittelverlust möglich, da kein Zugriff auf die eigentliche Kältetechnik stattfindet. An der eigentlichen Kältetechnik wird vor Ort nicht gearbeitet. Eine Kältemittelumstellung erfolgt schlicht und ergreifend durch Austausch des Primärmoduls bzw. der Primärmodule, so dass der eigentliche Austausch des Kältemittels werksseitig unmittelbar am gekapselten Primärmodul erfolgen kann.

Des weiteren ist von ganz besonderer Bedeutung, dass in erfindungsgemässer Weise die positive Charakteristik einer herkömmlichen Verbundanlage erhalten bleibt, nämlich die Realisierung unterschiedlicher Leistungsanforderungen, was bei herkömmlichen Verbundanlagen durch Ab- oder Zuschalten einzelner Verdichter erreicht wird. Dies erfolgt in erfindungsgemässer Weise dadurch, dass Primärmodule sekundärseitig bzw. soleseitig parallel verschaltet werden.

Eine besondere Flexibilität der erfindungsgemässen Kälteanlage ergibt sich - wie bereits zuvor gesagt - dadurch, dass mehrere die Kältetechnik in gekapselter Weise enthaltende Primärmodule im Sekundärkreislauf bzw. soleseitig zuschaltbar sind. Insoweit ist es möglich, den jeweiligen Sekundärkreislauf mit einem gemeinsamen Vorlauf und einem gemeinsamen Rücklauf vorzusehen, an den die Primärmodule ankoppelbar sind. Dadurch wird die Charakteristik einer herkömmlichen Verbundanlage realisiert, und zwar unter gleichzeitiger Realisierung der voranstehend erörterten Vorteile.

In weiter vorteilhafter Weise, insbesondere im Hinblick auf eine Optimierung der Kühlleistung der gesamten Anlage, haben die Primärmodule unterschiedliche Kühlleistungen, wobei Primärmodule unterschiedlicher Kühlleistungen beliebig miteinander kombinierbar sind. Zum Erhalt einer vorgebbaren oder geforderten Kälteleistung sind einzelne Primärmodule der gesamten Anlage aktivierbar, so dass sich aus der Aktivierung verschiedener Primärmodule die Gesamt-Kälteleistung der Anlage ergibt.

Grundsätzlich ist es möglich, die Anlage im Hinblick auf die Aktivierung der Primärmodule zu steuern, wobei der Steuerung unterschiedliche Parameter zugrundeliegen können. Von besonderem Vorteil ist es jedoch, wenn die Anlage im Hinblick auf die Aktivierung der Primärmodule regelbar ist, so dass je nach Kältebedarf eine unterschiedliche Anzahl und unterschiedliche Typen der Primärmodule - automatisch - aktiviert werden.

Im Konkreten könnte die Schaltung der Primärmodule im Hinblick auf die kleinste Kühlleistung der Kühlstellen optimierbar sein, so dass zumindest ein Primärmodul vorgesehen ist, welches zumindest die kleinste Kühlleistung erbringt. Ebenso ist es denkbar, die Schaltung der Primärmodule im Hinblick auf die zu erwartende oder vorgegebene Maximalleistung der Kühlstellen zu optimieren, so dass unter Hinzuschaltung einer definierten Anzahl von Primärmodulen die Maximalleistung der Kühlstellen - gegebenenfalls mit einer gewissen Reserve - erreichbar ist. In ihrer Leistung gestaffelte Primärmodule sind insoweit von Vorteil.

Grundsätzlich lässt sich die Schaltung der Primärmodule im Hinblick auf mögliche Betriebszustände der gesamten Anlage optimieren. Insoweit kann die Optimierung auf einen minimalen Energieverbrauch oder gar auf eine Minimierung der gesamten Betriebskosten der Anlage gerichtet sein. Bei einer Minimierung der gesamten Betriebskosten der Anlage sind unter anderem auch die Kosten eines jeweiligen Primärmoduls zu berücksichtigen, um nämlich berücksichtigen zu können, ob eine bestimmte Kühlleistung mit einem Primärmodul höherer Kühlleistung oder mit zwei oder mit mehreren Primärmodulen geringerer Kühlleistung realisiert werden soll. Letztendlich lassen sich hier unterschiedliche Faktoren bzw. Parameter dem Optimierungsprozess und der sich daraus ergebenden Regelung zugrunde legen.

In konstruktiver Hinsicht ist es von ganz besonderem Vorteil, wenn die Primärmodule in einem die Primärmodule aufnehmenden Rahmen anordenbar und über ein auf die Primärmodule abgestimmtes Anschlußsystem an den Sekundärkreislauf bzw. an die Sekundärkreisläufe anschliessbar sind. Durch diese Massnahme ist es möglich, die für sich gesehen unabhängigen Primärmodule als eigenständige Bausteine in das Gesamtsystem bzw. in die gesamte Kälteanlage einzubringen, nämlich durch Anordnung in dem die Primärmodule aufnehmenden Rahmen, wobei der Anschluss der Primärmodule durch ein besonderes Anschlußsystem erfolgt. Dieses Anschlußsystem umfasst einerseits die Stromversorgung und andererseits einfach handhabbare Anschlußstellen an den jeweiligen Vorlauf und Rücklauf des Sekundärkreislaufs. Insoweit wird auf einfache Weise erreicht, dass ausserhalb des Primärmoduls keine kältetechnischen Arbeiten zu verrichten sind, so dass sich der Einbau der Primärmodule und das Anschliessen innerhalb des Rahmens als einfache Installationsarbeit für Heizungs- und Sanitärinstallateure ergibt.

In weiter vorteilhafter Weise könnte der zum Entzug von Wärme dienende Sekundärkreislauf weiterreichend genutzt werden, nämlich zur Erwärmung eines zur Wärmespeicherung geeigneten Mediums. Dabei kann es sich um Brauchwasser handeln, so dass die Wärme über einen geeigneten Wärmetauscher einem Brauchwasserspeicher zugeführt wird. Dadurch lässt sich einerseits die überschüssige Wärme sicher abführen und andererseits einem weiteren Verwendungszweck zuführen.

Die modular ausgestalteten Primärmodule lassen sich im Rahmen der voranstehend erörterten Kälteanlage dann besonders gut handhaben bzw. innerhalb der Kälteanlage betreiben, wenn deren Optimierung unabhängig von einer etwaigen Optimierung des Sekundärkreislaufs vorgenommen werden kann. Dies ist dann möglich, wenn als Kältemittel des Primärkreislaufs ein ganz besonderes Stoffgemisch verwendet wird. Im Konkreten könnte das Kältemittel des Primärkreislaufs ein Stoffgemisch mit durch die Gemischzusammensetzung definierbarem und auf die jeweilige Sole abstimmbarem Temperaturglide sein. Des weiteren könnte das Kältemittel des Primärkreislaufs auf den Massestrom des Sekundärkreislaufs bzw. der umlaufenden Sole abstimmbar sein. In beiden Fällen findet eine Abstimmung auf das Betriebsverhalten des Sekundärkreislaufs statt.

Insoweit ist erkannt worden, dass sich die Kälteanlage bzw. der Betrieb der Kälteanlage in euergetischer Hinsicht dadurch weiter optimieren lässt, dass man versucht, das Kältemittel des Primärkreislaufs dem Temperaturglide der Sole anzupassen, wobei es sich dabei meist um eine Salzlösung handelt. Eine solche Anpassung findet dadurch statt, dass man ein Kältemittel für den Primärkreislauf auswählt, welches ebenfalls einen Temperaturglide aufweist. Stoffgemische weisen einen solchen Temperaturglide auf, wobei sich der dortige Temperaturglide durch die Gemischzusammensetzung definieren und dabei auf die jeweilige Sole abstimmen lässt. Durch geeignete Wahl des Kältemittels des Primärkreislaufs ist es somit möglich, eine optimale Anpassung an den Temperaturglide der Sole vorzunehmen, wobei sich dadurch der Energiebedarf des Systems reduzieren und gewissermassen optimieren lässt.

Zum besseren Verständnis der voranstehenden Ausführungen sei nachfolgend das Phänomen des genutzten Temperaturglides kurz erläutert. Dazu folgendes:

Während reine Stoffe bei der isobaren Kondensation bzw. Verdampfung (P = konstant) den Phasenwechsel bei konstanter Temperatur vollziehen, ändert sich bei Gemischen die Temperatur beim Übergang vom flüssigen in den gasförmigen Aggregatzustand oder umgekehrt. Diese Temperaturänderung wird als Temperaturglide bezeichnet. Der Temperaturglide hängt von mehreren Faktoren ab.

Je weiter die Siedetemperaturen der reinen Komponenten des Gemischs auseinander liegen, desto grösser ist üblicherweise der sich bei einem Gemisch aus diesen Komponenten ergebende Temperaturglide. An den Konzentrationsrändem des Gemischs, d.h. nahe der reinen Komponenten bzw. Stoffe, läuft der Temperaturglide gegen Null. Demnach ändert sich der Temperaturglide mit der Zusammensetzung und hat in der Mitte des Konzentrationsspektrums des Gemischs meist den grössten Wert. Folglich lässt sich der Temperaturglide durch Variation der Zusammensetzung des Gemischs beliebig einstellen und beispielsweise auf den Temperaturglide der Sole abstimmen.

Bei Gemischen, deren reine Komponenten eng beieinander liegende Siedetemperaturen aufweisen, ist der Temperaturglide meist sehr gering. Darüberhinaus existieren auch Gemische, bei denen überhaupt kein Temperaturglide auftritt. Hierbei handelt es sich grundsätzlich um azeotrope Gemische, bei denen der Temperaturglide 0K beträgt. Demnach verhalten sich diese Gemische beim isobaren Verdampfen und Kondensieren genauso wie deren reine Komponenten bzw. wie reine Fluide, es findet nämlich keine Konzentrationsänderung in der Gas- und Flüssigphase und somit auch kein Temperaturglide statt. Wenngleich solche Gemische selten sind, werden sie in der Kältetechnik bislang gerne verwendet, da man mit diesen Gemischen innerhalb der Kälteanlage keine Konzentrationsverschiebung zu befürchten hat. Obendrein lassen sich diese Gemische sehr einfach modelltechnisch darstellen bzw. modellieren, wodurch man relativ einfach Prozessberechnungen vornehmen kann.

Seit einigen Jahren wird intensiv nach neuen azeotropen Kältemittelgemischen gesucht, die nämlich aus umweltverträglichen Komponenten bestehen. Der voranstehend erörterte, aus der Praxis bekannte Nachteil lässt sich mit diesen Kältemitteln jedoch nicht vermeiden.

Die Anforderungen an ein ideales Kältemittel sind äusserst vielfältig. Ganz besonders an dessen thermodynamische Eigenschaften werden hohen Anforderungen gestellt. Ausserdem soll es umweltverträglich und dabei billig sein. Neben einer hohen Leistungszahl wird auch eine hohe volumetrische Kälteleistung in einem theoretischen Vergleichsprozess gefordert. Insbesondere vor dem Hintergrund der ozonzerstörenden Eigenschaften früherer Kältemittel wie R12 und R22 werden insbesondere im Gewerbekältebereich Gemische aus den reinen Stoffen R32, R125, R143a und R134a als Arbeitsfluide verwendet, die den hohen Anforderungen weitestgehend entsprechen. Neben diesen fluorierten Kohlenwasserstoffe (HFKW) gibt es auch natürliche Kältemittel, wie Propan, Butan oder Gemische aus diesen beiden Komponenten und schliesslich auch CO₂ sowie Ammoniak.

Letztendlich lassen sich zur Anwendung in der Gewerbekälte nur eine begrenzte Anzahl von Kältemitteln anwenden, die nämlich weitestgehend den Anforderungen genügen. In erfindungsgemässer Weise handelt es sich bei dem Kältemittel des Primärkreislaufs um ein Stoffgemisch, mit durch die Gemischzusammensetzung definierbarem und auf die jeweilige Sole abstimmbarem Temperaturglide.

In vorteilhafter Weise weist das Gemisch ein Temperaturglide von mindestens 1K auf. Gemische mit einem Temperaturglide im Bereich zwischen 3K und 8K eignen sich ganz besonders.

Übliche, nicht azeotrope Kältemittelgemische, die einen Temperaturglide von mehr als 1 K aufweisen, sind beispielsweise R404A, R407C oder R407E. Im Hinblick auf die indirekte Kühlung, bei der ein bestimmter Temperaturglide zur Erwärmung bzw. Abkühlung des Kälteträgers bzw. der Sole erforderlich ist, eignen sich insbesondere Kältemittel des Typs R407, bei dem es sich um ein temäres Gemisch aus R32, R125 und R134a handelt. Entsprechend dem hier realisierten Temperaturglide - bedingt durch die Anforderungen des Kälteträgers - ist es möglich, aus dem voranstehend genannten System eine Zusammensetzung bzw. einen Zusammensetzungsbereich auszuwählen, der sich möglichst eng mit dem Temperaturglide der Wärmeüberträger deckt. Das zuvor genannte ternäre Gemisch eignet sich sehr gut als Kältemittel, da es für weite Bereiche Temperaturglides von bis zu 7K aufweist, wodurch eine Optimierung der Zusammensetzung bezüglich der Temperaturdifferenz in idealer Weise möglich ist, zumal auch hinreichend genaue Stoffmodelle für dieses Gemisch zur Auswahl der jeweiligen Komponenten vorliegen.

An dieser Stelle sei ganz besonders hervorgehoben, dass ein energieoptimierter Betrieb einer Kälteanlage mit indirektem Kühlsystem dann besonders gut möglich ist, wenn der Temperaturglide des Kältemittels auf den durch die Sole geforderten Temperaturglide abgestimmt ist, und zwar durch Optimierung der Gemischzusammensetzung, wobei es sich um irgendein geeignetes Gemisch, gleichgültig aus wie vielen Komponenten bestehend, handeln kann. Dadurch ist eine Trennung der Optimierung des Primärkreislaufs von der Optimierung des Sekundärkreislaufs möglich, wobei die Optimierungsprozesse unabhängig voneinander und nicht wie bislang zwangsweise miteinander gekoppelt und dabei gleichzeitig durchführbar sind.

Des weiteren sollte das Kältemittel technisch stabil und nicht brennbar sein. Im Hinblick auf den Einsatz eines Kompressors ist es des weiteren erforderlich, dass das Kältemittel mit Öl mischbar ist. Ausserdem sollte das Kältemittel einen niedrigen Gefrierpunkt aufweisen, wodurch sich der Einsatz in einer gattungsgemässen Kälteanlagen besonders eignet. Zunehmend wird eine Umweltverträglichkeit jedweder Stoffe gefordert, so auch der Komponenten des Kältemittels.

Des weiteren ist es von Vorteil, wenn im System eine Druckanpassung möglich ist. Dazu könnte eine drehzahlgeregelte Pumpe zum Fördern des Kältemittel dienen.

Hinsichtlich der beanspruchten Lehre ist es von weiterem Vorteil, wenn die den Wärmetausch zwischen Primärkreislauf und Sole bewerkstelligen den Wärmetauscher im Gegenstrom arbeiten. Im Rahmen einer solchen Ausgestaltung lässt sich die Anpassung der Temperaturglides ganz besonders vorteilhaft nutzen.

Schliesslich könnten zwei oder mehrere Primärkreisläufe kaskadiert sein, um nämlich Kühlstellen mit unterschiedlichen Kältestufen zu realisieren. Dazu ist in vorteilhafter Weise mindestens ein weiterer Primärkreislauf vorgesehen, wobei die Kaltsole des ersten Primärkreislaufs als Warmsole des zweiten Primärkreislaufs dient und wobei eine Kaltsole des zweiten Primärkreislaufs zwischen dem zweiten Primärkreislauf und mindestens einer weiteren Kühlstelle zirkuliert. Durch diese Massnahmen lassen sich Kühlstellen mit unterschiedlichen Kältestufen realisieren, nämlich beispielsweise mit einer der Innentemperatur eines üblichen Kühlschranks entsprechenden Kühltemperatur und einer der üblichen Temperatur eines Gefrierfachs entsprechende Tiefkühltemperatur.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnungen zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
Fig. 1 ein Ausführungsbeispiel einer erfindungsgemässen Kälteanlage mit indirektem Kühlsystem, wobei dort zwei Primärmodule enthaltende Primärkreisläufe zur Realisierung unterschiedlicher Kältestufen kaskadiert sind und
Fig. 2 in einer schematischen Darstellung ein insgesamt sechs Primärmodule enthaltendes Aggregat, wobei dort drei unterschiedliche Typen von Primärmodulen miteinander kombiniert sind.

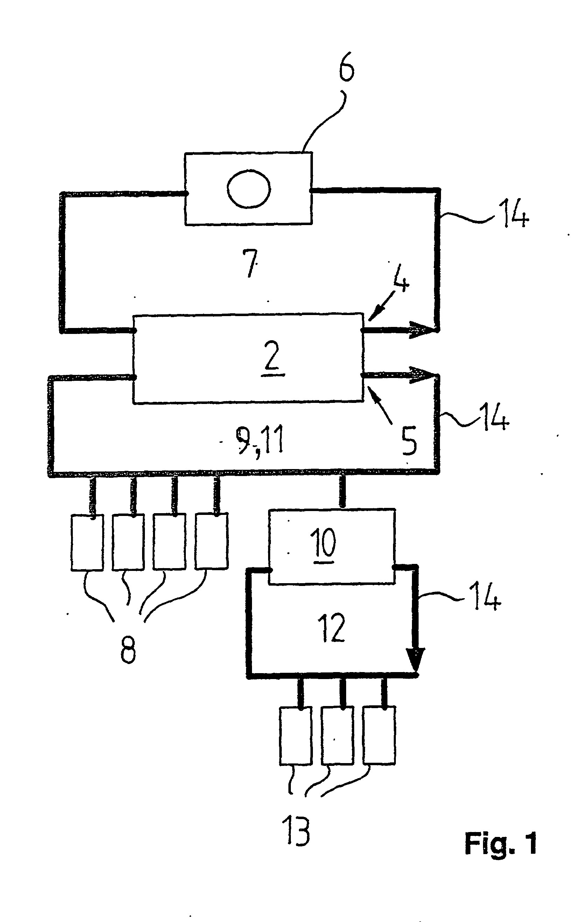

Fig. 1 zeigt schematisch eine Kälteanlage mit indirektem Kühlsystem, bestehend aus einem Primärmodule 1 enthaltenden Aggregat 2, welches die Primärmodule 1 in einem hier nicht gezeigten Rahmen trägt.

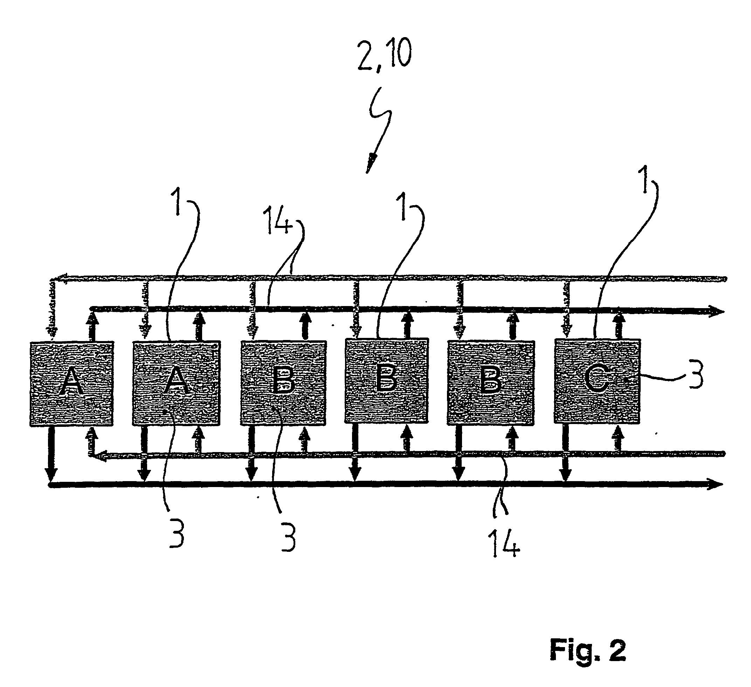

Fig. 2 zeigt schematisch ein Ausführungsbeispiel eines solchen Aggregats 2 mit insgesamt sechs Primärmodulen 1, wobei insgesamt drei Typen von Primärmodulen 1 mit unterschiedlicher Kühlleistung (Typ A, Typ B, Typ C) zusammengeschaltet sind.

Der in Fig. 1 symbolisch dargestellte Primärkreislauf 3 dient zur Bereitstellung normaler Kälte, wobei dieser Primärkreislauf 3 unterschiedliche Primärmodule 1 mit wiederum darin enthaltender Kältetechnik umfasst. Dazu gehört unter anderem ein in den Figuren nicht gezeigter Verdichter, ein Verflüssiger und ein Verdampfer. Innerhalb eines jeden Primärmoduls 1 zirkuliert ein Kältemittel, wobei die Zirkulation des Kältemittels auf das jeweilige Primärmodul 1 begrenzt ist.

Dem Aggregat 2 wird hochdruckseitig 4 über über einen in der Figur nicht gezeigten Wärmetauscher Wärme entzogen. Niederdruckseitig 5 wird dem Aggregat 2 ebenfalls über einen Wärmetauscher Wärme zugeführt, wobei zwischen dem ersten Wärmetauscher und einem in Figur 1 gezeigten Rückkühler 6 eine als Wärmeträger dienende Warmsole 7 zirkuliert. Zwischen dem zweiten Wärmetauscher und verschiedenen Kühlstellen 8 zirkuliert eine als Kälteträger dienende Kaltsole 9. Bei den Kühlstellen 8 handelt es sich um Kühlstellen mit normaler Kälte. Wie zuvor erwähnt, handelt es sich bei dem in den Primärmodulen 1 zirkulierenden Kältemittel um ein Stoffgemisch mit durch die Gemischzusammensetzung definierbarem und auf die jeweilige Sole 7, 9 abstimmbarem Temperaturglide.

Bei dem in Fig. 1 gezeigten Ausführungsbeispiel ist ein kaskadiertes zweites Aggregat 10 mit Primärmodulen 1 vorgesehen, welches zur weiteren Kühlung dient, nämlich auf eine tiefere Kälte bzw. auf ein niedrigeres Temperaturniveau. Im Konkreten dient die Kaltsole 9 des ersten Aggregats 2 als Warmsole 11 des zweiten Aggregats 10, wobei eine Kaltsole 12 des zweiten Aggregats 10 zwischen dem zweiten Aggregat 10 und weiteren Kühlstellen 13 zirkuliert. Bei den Kühlstellen 13 handelt es sich um Kühlstellen, die mit tiefer Kälte versorgt werden.

Eine Zusammenschau beider Figuren macht deutlich, dass der Primärkreislauf 3 als die Kältetechnik enthaltende, gekapselte, modulare Einheit ausgeführt und im Sekundärkreislauf 14 als Primärmodul 1 - soleseitig - zuschaltbar ist. Bei dem in Fig. 2 gezeigten Ausführungsbeispiel sind insgesamt sechs Primärmodule 1 vorgesehen, die drei unterschiedliche Kühlleistungen (A, B und C) aufweisen.

Fig. 2 zeigt des weiteren andeutungsweise an, dass die Primärmodule 1 des dort gezeigten Aggregats 2 bzw. 10 im Sekundärkreislauf 14 parallel zueinander geschaltet sind. Zum Erhalt der geforderten Kälteleistung ist die gesamte Kälteanlage geregelt, wobei die Regelung eine Optimierung unter Berücksichtigung der erforderlichen kleinsten Kühlleistung, der geforderten Maximalleistung sowie der Forderung nach geringem Energieverbrauch bei insgesamt geringen Betriebskosten zum Ziel hat.

## Patentansprüche

1. Kälteanlage mit indirektem Kühlsystem, bestehend aus einem mindestens einen Verdichter, einen Verflüssiger und einen Verdampfer umfassenden Primärkreislauf (3) mit zirkulierendem Kältemittel, wobei dem Primärkreislauf (3) hochdruckseitig (4), über einen ersten Wärmetauscher, Wärme entzogen und niederdruckseitig (5), über einen zweiten Wärmetauscher, Wärme zugeführt wird, und wobei zwischen dem ersten Wärmetauscher und einem Rückkühler (6) eine als Wärmeträger dienende Warmsole (7) und zwischen dem zweiten Wärmetauscher und mindestens einer Kühlstelle (8) eine als Kälteträger dienende Kaltsole (9) -jeweils in einem Sekundärkreislauf (14) - zirkuliert,
**dadurch gekennzeichnet, dass** der Primärkreislauf (3) aus parallel wirkenden die Kältetechnik enthaltenden, gekapselen, modulare Einheten ausgeführt ist und mindestens zwei dieser Einheiten parallel zueinander im Sekundärkreislauf (14) - soleseitig - als Primärmodul (1) zugeschaltet sind.

2. Kälteanlage nach Anspruch 1, **dadurch gekennzeichnet, dass** die Primärmodule (1) vorzugsweise unterschiedliche Kühlleistungen haben.

3. Kälteanlage nach Anspruch 2, **dadurch gekennzeichnet, dass** zum Erhalt einer vorgebbaren oder geforderten Kälteleistung einzelne Primärmodule (1) aktivierbar sind.

4. Kälteanlage nach einem der Ansprüche 1 bis 3, **dadurch gekennzeichnet, dass** die Anlage im Hinblick auf die Aktivierung der Primärmodule (1) steuerbar oder regelbar ist.

5. Kälteanlage nach Anspruch 3 oder 4, **dadurch gekennzeichnet, dass** die Schaltung der Primärmodule (1) im Hinblick auf die kleinste Kühlleistung der Kühlstellen (8, 13) optimierbar ist oder dass die Schaltung der Primärmodule (1) im Hinblick auf die zu erwartende oder vorgegebene Maximalleistung der Kühlstellen (8, 13) optimierbar ist oder dass die Schaltung der Primärmodule (1) auf mögliche Betriebszustände der gesamten Anlage optimierbar ist oder dass die Schaltung der Primärmodule (1) im Hinblick auf einen minimierten Energieverbrauch optimierbar ist oder dass die Schaltung der Primärmodule (1) im Hinblick auf eine Minimierung der gesamten Betriebskosten der Anlage optimierbar ist.

6. Kälteanlage nach einem der Ansprüche 1 bis 5, **dadurch gekennzeichnet, dass** die Primärmodule (1) in einem die Primärmodule (1) aufnehmendem Rahmen anordenbar und über ein auf die Primärmodule (1) abgestimmtes Anschlusssystem an den Sekundärkreislauf (14) anschließbar sind.

7. Kälteanlage nach einem der Ansprüche 1 bis 6, **dadurch gekennzeichnet, dass** der zum Entzug von Wärme dienende Sekundärkreislauf (14) zur Erwärmung eines zur Wärmespeicherung geeigneten Mediums dient, wobei es sich bei dem Wärme speichernden Medium um einen Brauchwasserspeicher handeln kann.

8. Kälteanlage nach einem der Ansprüche 1 bis 7, **dadurch gekennzeichnet, dass** als Kältemittel des Primärkreislaufs (3) ein Stoffgemisch mit auf das Betriebsverhalten des Sekundärkreislaufs (14) abstimmbarem Temperaturglide dient, wobei das Kältemittel des Primärkreislaufs (3) ein Stoffgemisch mit durch die Gemischzusammensetzung definierbarem und auf die jeweilige Sole abstimmbarem Temperaturglide sein kann und/oder wobei das Kältemittel des Primärkreislaufs (3) auf den Massenstrom des Sekundärkreislaufs (14) bzw. der umlaufenden Sole abstimmbar sein kann.

9. Kälteanlage nach Anspruch 8, **dadurch gekennzeichnet, dass** das Gemisch einen Temperaturglide von mindestens 1K, vorzugsweise im Bereich zwischen 3 und 8 K, aufweist.

10. Kälteanlage nach Anspruch 8 oder 9, **dadurch gekennzeichnet, dass** es sich bei dem Gemisch um ein binäres oder um ein ternäres Gemisch mit vorzugsweise zwei Komponenten handelt, beispielsweise um ein Gemisch der Stoffe R32, R125, R134a und 143a.

11. Kälteanlage nach einem der Ansprüche 8 bis 10, **dadurch gekennzeichnet, dass** das Kältemittel chemisch stabil und/oder nicht brennbar und/oder umweltverträglich ist und vorzugsweise einen niedrigen Gefrierpunkt aufweist.

12. Kälteanlage nach einem der Ansprüche 8 bis 11, **dadurch gekennzeichnet, dass** zum Fördern des Kältemittels eine drehzahlgeregelte Pumpe dient und dass die Wärmetauscher im Gegenstrom arbeiten.

13. Kälteanlage nach einem der Ansprüche 8 bis 12, **dadurch gekennzeichnet, dass** mindestens ein weiterer Primärkreislauf (3) vorgesehen ist, wobei die Kaltsole (9) des ersten Primärkreislaufs (3) als Warmsole (11) des zweiten Primärkreislaufs (3) dient und wobei eine Kaltsole (12) des zweiten Primärkreislaufs (3) zwischen dem zweiten Primärkreislauf (3) und mindestens einer Kühlstelle (13) zirkuliert.

## Claims

1. A refrigeration plant having an indirect cooling system, consisting of a primary circuit (3) with circulating refrigerant, which circuit comprises at least one compressor, a condenser and an evaporator, wherein heat is extracted from the primary circuit (3) on the high pressure side (4) by way of a first heat-exchanger and heat is input to the primary circuit (3) on the low pressure side (5) by way of a second heat-exchanger, and wherein - in respective secondary circuits (14) - a hot brine (7) serving as heat transfer medium is circulated between the first heat-exchanger and a recooler (6) and a cold brine (9) serving as refrigerating medium is circulated between the second heat-exchanger and at least one cooling point (8), **characterised in that** the primary circuit (3) is constructed from parallel-acting, encapsulated modular units containing the refrigerating technology and at least two of these units are connected in parallel with one another in the secondary circuit (14) - on the brine side - as a primary module (1).

2. A refrigeration plant according to claim 1, **characterised in that** the primary modules (1) preferably have different cooling capacities.

3. A refrigeration plant according to claim 2, **characterised in that** individual primary modules (1) are activatable to obtain a pre-determinable or required refrigeration efficiency.

4. A refrigeration plant according to any one of claims 1 to 3, **characterised in that** the plant is arranged to be controlled or regulated in respect of the activation of the primary modules (1).

5. A refrigeration plant according to claim 3 or 4, **characterised in that** the connection of the primary modules (1) is arranged to be optimised in respect of the smallest cooling capacity of the cooling points (8, 13) or **in that** the connection of the primary modules (1) is arranged to be optimised in respect of the anticipated or predetermined maximum capacity of the cooling pints (8, 13) or **in that** the connection of the primary modules (1) is arranged to be optimised in respect of possible operating states of the plant as a whole or **in that** the connection of the primary modules (1) is arranged to be optimised in respect of a minimised energy consumption or **in that** the connection of the primary modules (1) is arranged to be optimised in respect of minimisation of the overall operating costs of the plant.

6. A refrigeration plant according to any one of claims 1 to 5, **characterised in that** the primary modules (1) can be arranged in a frame accommodating the primary modules (1) and are connectible to the secondary circuit (14) by way of a connection system adapted to the primary modules (1).

7. A refrigeration plant according to any one of claims 1 to 6, **characterised in that** the secondary circuit (14) serving to extract heat serves to heat a medium suitable for heat storage, wherein the heat-storing medium can be a service water reservoir.

8. A refrigeration plant according to any one of claims 1 to 7, **characterised in that** a substance mixture having a temperature glide matchable to the operating performance of the secondary circuit (14) is used as refrigerant of the primary circuit (3), wherein the refrigerant of the primary circuit (3) can be a substance mixture having a temperature glide definable by the mixture composition and matchable to the respective brine and/or wherein the refrigerant of the primary circuit (3) can be matchable to the mass flow of the secondary circuit (14) respectively the circulating brine.

9. A refrigeration plant according to claim 8, **characterised in that** the mixture has a temperature glide of at least 1 K, preferably in the range between 3 and 8 K.

10. A refrigeration plant according to claim 8 or 9, **characterised in that** the mixture is a binary or a ternary mixture having preferably two components, for example a mixture of the substances R32, R125, R134a and 143a.

11. A refrigeration plant according to any one of claims 8 to 10, **characterised in that** the refrigerant is chemically stable and/or incombustible and/or environmentally safe and preferably has a low freezing point.

12. A refrigeration plant according to any one of claims 8 to 11, **characterised in that** a variable speed pump is used to convey the refrigerant and **in that** the heat exchangers operate on the countercurrent principle.

13. A refrigeration plant according to any one of claims 8 to 12, **characterised in that** at least one further primary circuit (3) is provided, the cold brine of the first primary circuit (3) serving as hot brine (11) of the second primary circuit (3) and wherein a cold brine (12) of the second primary circuit (3) circulates between the second primary circuit (3) and at least one cooling point (13).

## Revendications

1. Installation frigorifique avec un système de refroidissement indirect, constitué d'un circuit primaire (3) à fluide frigorigène circulant comprenant au moins un compresseur, un condenseur et un vaporiseur, de la chaleur étant extraite du circuit primaire (3) du côté haute pression (4) par l'intermédiaire d'un premier échangeur de chaleur et de la chaleur étant amenée au circuit primaire (3) du côté basse pression (5) par l'intermédiaire d'un second échangeur de chaleur et une saumure chaude (7) servant d'agent caloporteur circulant entre le premier échangeur de chaleur et un recondenseur (6) et une saumure froide (9) servant d'agent réfrigérant circulant entre le second échangeur de chaleur et au moins une station de refroidissement (8) - respectivement dans un circuit secondaire (14)-,
**caractérisée par le fait que** le circuit primaire (3) est réalisé à partir d'unités modulaires "encapsulées" agissant en parallèle et contenant la technique frigorifique et au moins deux de ces unités sont raccordées en parallèle l'une à l'autre dans le circuit secondaire (14) - du côté saumure - en tant que module primaire (1).

2. Installation frigorifique selon la revendication 1,
**caractérisée par le fait que** les modules primaires (1) ont de préférence des puissances de refroidissement différentes.

3. Installation frigorifique selon la revendication 2,
**caractérisée par le fait que** des modules primaires (1) individuels peuvent être actionnés pour l'obtention d'une puissance de refroidissement pouvant être prédéfinie ou demandée.

4. Installation frigorifique selon l'une des revendications 1 à 3,
**caractérisée par le fait que** l'installation peut être commandée ou réglée en vue de l'activation des modules primaires (1).

5. Installation frigorifique selon la revendication 3 ou 4,
**caractérisée par le fait que** le réglage des modules primaires (1) peut être optimisé en vue de la puissance de refroidissement la plus petite des stations de refroidissement (8,13) ou que le réglage des modules primaires (1) peut être optimisé en vue de la puissance maximale à attendre ou prédéfinie des stations de refroidissement (8,13) ou que le réglage des modules primaires (1) peut être optimisé sur des états de fonctionnement possibles de l'ensemble de l'installation ou que le réglage des modules primaires (1) peut être optimisé en vue d'une consommation d'énergie minimisée ou que le réglage des modules primaires (1) peut être optimisé en vue d'une réduction au minimum des coûts de fonctionnement d'ensemble de l'installation.

6. Installation frigorifique selon l'une des revendications 1 à 5,
**caractérisée par le fait que** les modules primaires (1) peuvent être disposés dans un châssis recevant les modules primaires (1) et peuvent être raccordés au circuit secondaire (14) par l'intermédiaire d'un système de connexion accordé aux modules primaires (1).

7. Installation frigorifique selon l'une des revendications 1 à 6,
**caractérisée par le fait que** le circuit secondaire (14) servant à l'extraction de chaleur sert à l'échauffement de milieu approprié pour l'accumulation de chaleur, pouvant s'agir pour le milieu approprié pour l'accumulation de chaleur d'un accumulateur d'eau sanitaire.

8. Installation frigorifique selon l'une des revendications 1 à 7,
**caractérisée par le fait qu'**un mélange de substances avec un glissement de température pouvant être accordé au comportement de fonctionnement du circuit secondaire (14) sert de fluide frigorigène du circuit primaire (3), le fluide frigorigène du circuit primaire (3) pouvant être un mélange de substances avec un glissement de température pouvant être défini par la composition du mélange et pouvant être accordé à la saumure respective et/ou le fluide frigorigène du circuit primaire (3) pouvant être accordé au courant de masse du circuit secondaire (14) ou respectivement de la saumure circulante.

9. Installation frigorifique selon la revendication 8,
**caractérisée par le fait que** le mélange présente un glissement de température d'au moins 1 K, de préférence dans la plage entre 3 et 8 K.

10. Installation frigorifique selon la revendication 8 ou 9,
**caractérisée par le fait qu'**il s'agit pour le mélange d'un mélange binaire ou d'un mélange tertiaire avec de préférence deux composants, par exemple un mélange de substances R32, R125,R134a et 143a.

11. Installation frigorifique selon l'une des revendications 8 à 10,
**caractérisée par le fait que** l'agent frigorigène est stable chimiquement et/ou non combustible et/ou compatible avec l'environnement et présente de préférence un point de congélation bas.

12. Installation frigorifique selon l'une des revendications 8 à 11,
**caractérisée par le fait qu'**une pompe réglée en vitesse de rotation sert au transport du fluide frigorigène et que les échangeurs de chaleur travaillent à contre-courant.

13. Installation frigorifique selon l'une des revendications 8 à 12,
**caractérisée par le fait qu'**au moins un autre circuit primaire (3) est prévu, la saumure froide (9) du premier circuit primaire (3) servant de saumure chaude (11) du second circuit primaire (3) et une saumure froide (12) du second circuit primaire (3) circulant entre le second circuit primaire (3) et au moins une station de refroidissement (13).
